# EUROPÄISCHE PATENTSCHRIFT

(11) **EP 1 855 034 B1**
(45) Veröffentlichungstag und Bekanntmachung des Hinweises auf die Patenterteilung: **05.12.2012**
(21) Anmeldenummer: 06014501.8
(22) Anmeldetag: 12.07.2006
(51) Int. Cl.: F16J 15/10

(54) **Flachdichtung**
Gasket
Joint plat

(30) Priorität: 12.05.2006 DE 102006022708
(43) Veröffentlichungstag der Anmeldung: 14.11.2007
(73) Patentinhaber: Carl Freudenberg KG, 69469 Weinheim (DE)
(72) Erfinder: Klenk, Thomas, 69214 Eppelheim (DE); Barth, Armin, 69517 Gorxheimertal (DE); Liedtke, Ulrich, 69514 Laudenbach (DE)

(56) Entgegenhaltungen:
- EP-A- 1 525 974
- DE-A1- 10 128 346
- GB-A- 1 168 184
- GB-A- 2 236 560
- US-A- 2 868 575
- US-A- 3 137 935
- US-A- 3 174 764
- US-A- 3 230 290

## Beschreibung

### Technisches Gebiet

Die Erfindung betrifft eine Flachdichtung zur statischen Abdichtung von Maschinenelementen, umfassend zwei Lagen aus einem mit PTFE versehenen Trägermaterial und zumindest eine Einlage die zwischen den Lagen angeordnet ist sowie ein Verfahren zu dessen Herstellung.

### Stand der Technik

Derartige Flachdichtungen sind aus der DE 101 28 346 A1 und EP 1525974 A1 bekannt. Derartige Flachdichtungen werden insbesondere zur statischen Abdichtung von Flanschverbindungen und zur Abdichtung von Behälterverschlussdeckeln in der chemischen Industrie verwendet. Das mit PTFE versehene Trägermaterial, beispielsweise ein Vliesstoff, zeichnet sich durch eine hohe Beständigkeit gegenüber einer Vielzahl von Medien aus. Durch die Einlagen, beispielsweise aus einem metallischen Werkstoff, verbessern sich die mechanischen Eigenschaften der Flachdichtung. Bei der Abdichtung gegenüber besonders reaktiven Medien ist es notwendig, wenigstens den Innenumfang der Flachdichtung derart auszurüsten, dass das aggressive Medium nicht mit den Einlagen in Berührung gelangt.

Andere Flachdichtungen mit Lagen aus PTFE sind aus den Dokumenten GB-A1-1168184, GB-A-2236560, US-3174764-A1, US-2868575-A, US-3230290-A und US-3137935-A1 bekannt.

### Darstellung der Erfindung

Der Erfindung liegt die Aufgabe zugrunde eine Flachdichtung zur statischen Abdichtung von Maschinenelementen bereitzustellen, die beständig gegenüber aggressiven Medien ist und die einfach und kostengünstig herstellbar ist.

Diese Aufgabe wird mit den Merkmalen von Anspruch 1 und 7 gelöst. Auf vorteilhafte Ausgestaltungen nehmen die Unteransprüche Bezug.

Zur Lösung der Aufgabe sind die zwei Lagen so verbunden, dass zumindest der Innenumfang der Flachdichtung geschlossen ist. Derartig ausgebildete Flachdichtungen sind besonders einfach herstellbar und aufgrund der fluiddichten Verbindung der beiden Lagen ist die Einlage der Flachdichtung in Richtung des abzudichtenden Raums gegenüber aggressiven Medien geschützt. Es werden keine zusätzlichen Dichtungselemente benötigt, um die Flachdichtung gegenüber den aggressiven Medien zu schützen und die Flachware kann besonders kostengünstig aus Bahnenware hergestellt werden. Da das PTFE in das Trägermaterial eingelagert ist, wird eine Fließneigung des PTFE unterbunden, wodurch die Flachdichtung auch bei hohen Drücken einsetzbar ist.

Die zwei Lagen können am Innenumfang und am Außenumfang der Flachdichtung stoffschlüssig miteinander verbunden sein. Dadurch ist die Flachdichtung, insbesondere die Einlagen, auch in Richtung der Umgebung geschützt. Das ist insbesondere dann wichtig, wenn auch in der Umgebung aggressive Medien vorhanden sind. Bei dieser Ausgestaltung sind die Einlagen vollständig gekapselt und die Flachdichtung weist eine Oberfläche auf, die ausschließlich aus dem mit PTFE versehenen Trägermaterial, auch als PTFE-Vlies bezeichnet, besteht. Derartig ausgestaltete Flachdichtungen können ebenfalls aus Bahnenware hergestellt werden.

Das Trägermaterial kann ein Vliesstoff sein. Das Vlies besitzt eine durch Nadeln oder Wasserstrahlverfestigung dreidimensionale, offene und poröse Struktur, die durch die mechanische Bindung auch bei hohen Temperaturen stabil ist. Durch die offene und poröse Struktur kann bei der Imprägnierung mit PTFE ein Gehalt bis zu 99% PTFE erreicht werden. Die offene Struktur ermöglicht eine vollständige Durchdringung des Vliesstoffes. Eine Spaltextrusion des PTFE wird durch das Verhaken des PTFE in der Matrix des Vliesstoffes verhindert. Der Vliesstoff kann aus Fasern oder aus Fasermischungen aus Polyamid, Polybenzinidazol, Polyester, Glas, Aramid, Polyacryl, Polyacrylnitril, preoxidiertem PAN, Kohle, Mineralen, z.B. auch Basalt, und/oder Graphit hergestellt sein. Die Vliesstoffbahnen haben vorzugsweise eine Dicke kleiner als 4 mm, besonders bevorzugt 0,5 bis 2 mm. Bei diesen Dicken wird schon bei kleinen Verweildauern von zum Beispiel einer Durchlaufgeschwindigkeit von 5 m/min im Imprägnierbad eine vollständige Durchdringung des Vliesstoffes mit PTFE erreicht. Bevorzugt entspricht der PTFE Anteil einem Gewichtsgehalt von 50 bis 99% des mit PTFE imprägnierten Vlieses, wobei 99 % dem maximalen Sättigungsgrad des Vliesstoffes mit PTFE entspricht. Der eingesetzte Vliesstoff wird vorzugsweise mit einer wässrigen PTFE- Dispersion imprägniert. Diese Dispersion kann auch anorganische Füllstoffe enthalten. Besonders gute Ergebnisse werden erreicht, wenn der PTFE- Dispersion bis zu 50 Gew.-% bezogen auf die Trockenmasse an PTFE an Graphit, Kohle, Talkum, Glimmer, Bronze, Ekonol, Kaolin, Silikate, Bornitrid und/oder Molybdändisulfid sowie Mischungen daraus als anorganische Füllstoffe zugegeben werden. In anderen Ausgestaltungen kann das Trägermaterial auch ein Gewebe oder ein Textil sein.

Die Einlage kann zumindest teilweise aus einem elastomeren Werkstoff bestehen. Als elastomerer Werkstoff können verschiedene Elastomere, beispielsweise aus Naturkautschuk, EPDM, Acrylat-Kautschuk oder FKM zum Einsatz gelangen. Die Einlage aus elastomerem Werkstoff verbessert die elastischen Eigenschaften der Flachdichtung. Die elastomeren Einlagen können zur Verbesserung der Eigenschaften mit Metallpartikeln versehen sein.

In anderen Ausgestaltungen kann die Einlage auch aus thermoplastischen Werkstoffen beispielsweise PEEK oder glasfaserverstärktem Kunststoffen bestehen. Derartige Einlagen sind kostengünstig und versteifen die Flachdichtung.

Die Einlage kann zumindest teilweise aus einem metallischen Werkstoff bestehen. Metallische Lagen können insbesondere als Streckmetall, Wellenblech oder als Tellerfeder ausgebildet sein. Die metallischen Eigenschaften verbessern die mechanischen Eigenschaften, insbesondere die Federungseigenschaften der Flachdichtung, Des Weiteren können größere Toleranzen der Dichtungsstelle ausgeglichen werden. Die größeren Toleranzen treten insbesondere bei Flanschen auf, die zur besseren chemischen Beständigkeit mit Email oder Glas ausgekleidet sind. Bei diesen Flanschen oder auch Deckeln oder Mannlochdeckeln treten herstellungsbedingt größere Toleranzen auf die durch die Flachdichtung ausgeglichen werden. Durch den plastisch verformbaren PTFE-Anteil werden gleichzeitig Schäden durch erhöhte Spitzenlasten vermieden. Dabei kann das Streckmetall in Form von Quadratmasche, Rundmaschen oder Sechseckmaschen vorliegen. Diese werden in geeigneter Größe ausgestanzt und mit den Lagen verarbeitet. Die metallischen Lagen können aus Edelstahl, Stahl oder anderen Metallen bestehen. Die metallischen Lagen können auch aus Federblechen, Lochblechen oder kalandrierten Spießblechen bestehen.

Die Einlage kann zumindest ein Element aus einem elastomeren Werkstoff und zumindest ein weiteres Element aus einem metallischen Werkstoff aufweisen. Dadurch können die positiven Eigenschaften der beiden verschiedenen Werkstoffgruppen kombiniert werden und die Flachdichtung kann optimal auf den jeweiligen Anwendungsfall abgestimmt werden. Bei dieser Ausgestaltung ergibt sich ein sandwichartiger Aufbau der Flachdichtung.

In die Flachdichtung können Sensoren, insbesondere Temperatur-, Druckund/oder Leckagesensoren oder auch Kabeldurchführungen integriert sein.

Diese lassen sich aufgrund des erfinderischen Verfahrens besonders einfach integrieren. Beschädigungen an Isolierungen und ähnlichem sind aufgrund der niedrigen Verfahrenstemperaturen ausgeschlossen.

Das erfindungsgemäße Verfahren zur Lösung der Aufgabe umfasst die Schritte:
- Benetzen eines Trägermaterial mit PTFE und anschließendes Trocken;
- Ausstanzen von Lagen aus dem Trägermaterial
- Konfektionieren der Flachdichtung bestehend aus Lagen und Einlagen;
- Formgebungsverfahren, welches derart durchgeführt wird, dass die Flachdichtung zumindest an ihrem Innenumfang mit dem mit PTFE versehenen Trägermaterial versehen ist.

Das Herstellungsverfahren der erfindungsgemäßen Flachdichtung ist besonders einfach und kostengünstig, da die Lagen und die Einlagen aus kostengünstiger Bahnware bereitgestellt werden kann. Die Lagen und die Einlagen werden konfektioniert und in einem gemeinsamen Prozess, vorzugsweise in einem Compression-Molding Prozess, umgeformt und gleichzeitig gesintert. Die Werkstoffe von Lagen und Einlagen können einfach an den jeweiligen Anwendungsfall angepasst werden.

Mit dem Formgebungsverfahren erfolgt gleichzeitig eine Wärmebehandlung der Flachdichtung. Durch die auch als Sintern bezeichnete Wärmebehandlung werden die Lagen der Flachdichtung verfestigt und die Spaltextrusionsneigung wird nochmals verringert. Vor dem Sintern kann durch nochmaliges PTFE-Tränken des Rohlings eine Verringerung der Oberflächenporosität erreicht werden.

Eine Lage kann eine größere Fläche aufweisen als die andere Lage, wobei der Überstand der größeren Lage beim Formgebungsverfahren in Richtung des Innenumfangs oder in Richtung des Innen- und des Außenumfangs der Flachdichtung umgeformt werden kann. Dabei werden für eine vollständige Ummantelung mit PTFE-Vlies lediglich zwei Lagen benötigt. Die Lage mit der größeren Fläche weist gegenüber der anderen Lage am Innenumfang und am Außenumfang einen Überstand auf. Dieser Überstand wird durch einen Umformvorgang umgebördelt und bildet dadurch die Verkleidung des Innenund Außenumfangs. Dadurch sind die Einlagen der Flachdichtung vollständig gekapselt.

Zumindest eine weitere Lage kann aus dem Trägermaterial ausgestanzt werden, die am Innenumfang der Flachdichtung angeordnet und die im Formgebungsverfahren stoffschlüssig mit den beiden Lagen verbunden werden kann. Dadurch vereinfacht sich das Formgebungsverfahren, da die Lagen lediglich konfektioniert und anschließend verpresst werden müssen. In anderen Ausgestaltungen ist auch denkbar, dass als Halbzeug vorbereitete Lagen, beispielsweise Lagen in L-Form zu Flachdichtungen konfektioniert werden.

### Kurzbeschreibung der Zeichnung

Einige Ausführungsbeispiele der erfindungsgemäßen Flachdichtung werden nachfolgend anhand der Figuren näher erläutert. Diese zeigen, jeweils schematisch:
- Fig. 1: eine Flachdichtung mit einer Einlage aus Elastomer und Metall;
- Fig. 2: eine konfektionierte Flachdichtung vor der Formgebung;
- Fig. 3: als Halbzeug vorbereitete Lagen;
- Fig. 4: eine weitere Ausgestaltung von als Halbzeug ausgeführten Lagen;
- Fig. 5: eine weitere Ausgestaltung von als Halbzeug ausgeführten Lagen;
- Fig. 6: eine weitere Ausgestaltung von als Halbzeug ausgeführten Lagen;
- Fig. 7: eine kreisförmig ausgeführte erfindungsgemäße Flachdichtung;
- Fig. 8: eine dreieckförmig ausgeführte erfindungsgemäße Flachdichtung;
- Fig. 9: eine erfindungsgemäße Flachdichtung mit Kraftnebenschluss;
- Fig. 10: eine erfindungsgemäße Flachdichtung mit Profilierung;
- Fig. 11: eine erfindungsgemäße Flachdichtung mit einer weiteren Profilierung;
- Fig. 12: eine erfindungsgemäße Flachdichtung mit einer weiteren Profilierung.

### Ausführung der Erfindung

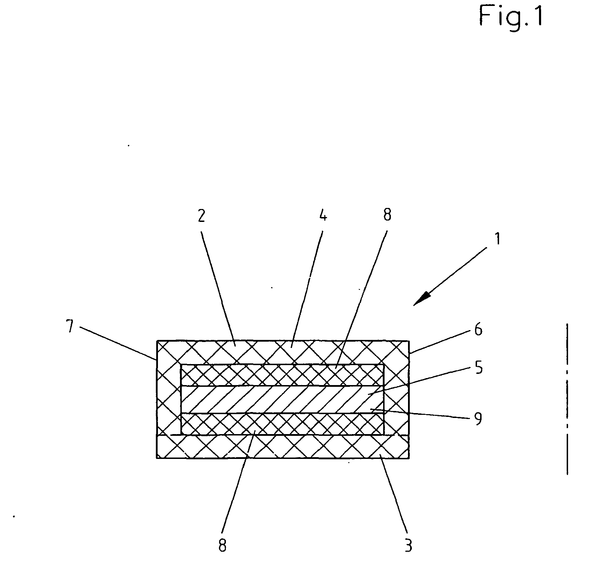

Figur 1 zeigt eine Flachdichtung 1 zur statischen Abdichtung von Maschinenelementen, insbesondere von Flanschverbindungen in der chemischen oder pharmazeutischen Industrie. Die Flachdichtung 1 umfasst zwei Lagen 2, 3, die aus einem mit PTFE versehenen Trägermaterial 4, welches in dieser Ausführung ein Vliesstoff ist. Zwischen den Lagen 2, 3 ist eine Einlage 5 angeordnet, die ein Element 8 aus einem elastomeren Werkstoff, in dieser Ausführung Gummi und ein weiteres Element 9 aus einem metallischen Werkstoff, in dieser Ausführung ein Streckmetall aus Stahl, aufweist. Die Einlage 5 ist von den Lagen 2, 3 vollständig umschlossen, indem die zwei Lagen 2, 3 am Innenumfang 6 und am Außenumfang 7 der Flachdichtung 1 stoffschlüssig miteinander verbunden sind.

Zur Herstellung der Flachdichtung 1 wird ein Trägermaterial 4 mit PTFE benetzt und anschließend getrocknet. Aus der sich daraus bildenden Bahnware werden die Lagen 2, 3 ausgestanzt. Die Lagen 2, 3 werden mit den Einlagen 5 zu der Flachdichtung konfektioniert. Anschließend erfolgt ein Formgebungsverfahren, beispielsweise compression molding. Durch das Formgebungsverfahren werden die Lagen 2, 3 so geformt, dass die Flachdichtung 1 zumindest an ihrem Innenumfang 6 mit dem mit PTFE versehenen Trägermaterial 4 versehen ist. Mit dem Formgebungsverfahren erfolgt gleichzeitig eine Wärmebehandlung der Flachdichtung 1.

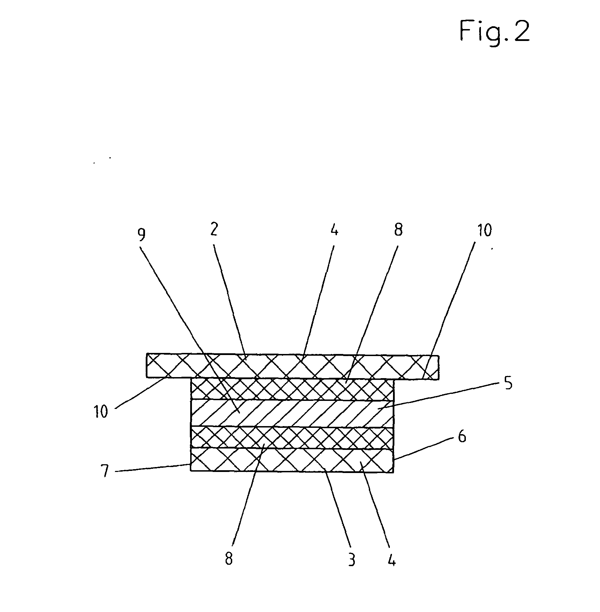

Figur 2 zeigt eine konfektionierte Flachdichtung 1 für eine Herstellungsvariante bei der eine Lage 2 eine größere Fläche aufweist als die andere Lage 3, wobei der Überstand 10 der größeren Lage 2 beim Formgebungsverfahren in Richtung des Innenumfangs 6 oder in Richtung des Innen- und des Außenumfangs 6, 7 der Flachdichtung 1 umgeformt wird.

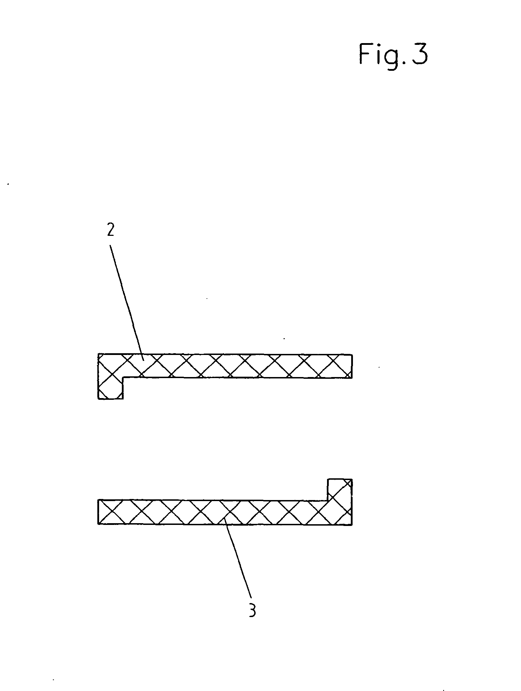

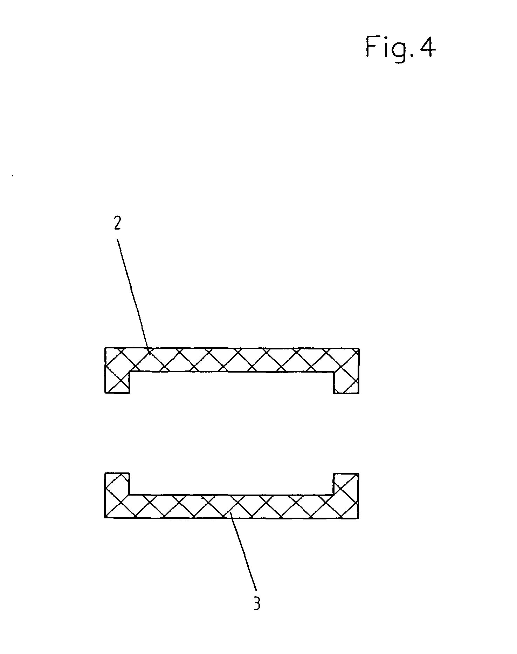

Die Figuren 3 und 4 zeigen vorbereitete Lagen 2, 3 für weitere Herstellungsvarianten. Dabei werden die Lagen 2, 3 L-förmig oder U-förmig umgeformt, bevor sie konfektioniert und miteinander verpresst werden.

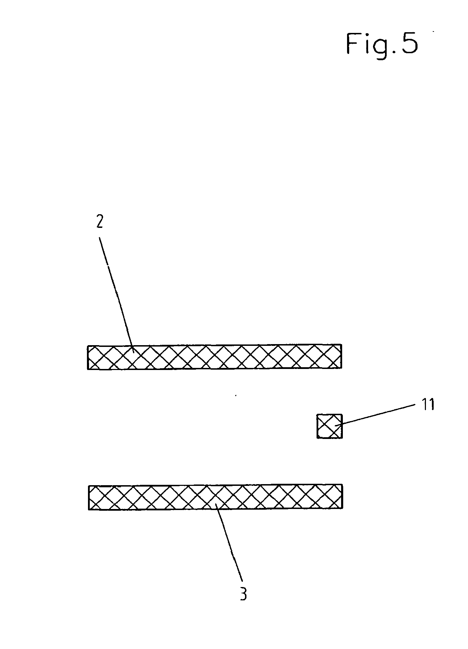

In der Ausgestaltung gemäß Figur 5 wird eine weitere Lage 11 aus dem Trägermaterial 4 ausgestanzt, die am Innenumfang 6 der Flachdichtung 1 angeordnet wird und die im Formgebungsverfahren stoffschlüssig mit den beiden Lagen 2, 3 verbunden wird.

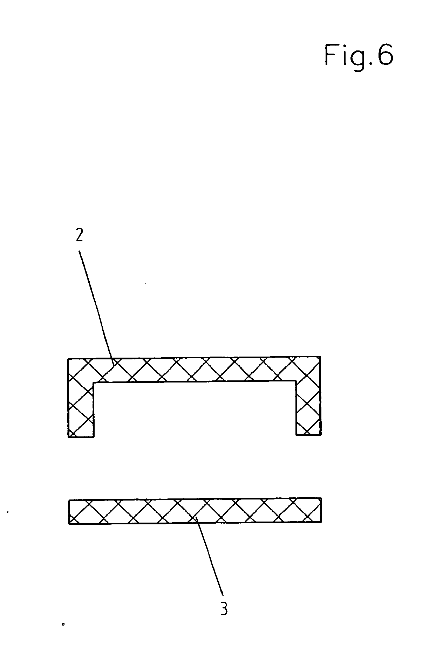

Gemäß Figur 6 wird eine Lage 2 U-förmig umgeformt, wobei der Außendurchmesser der Lage 2 identisch mit dem Außendurchmesser der flach ausgebildeten Lage 3 ist.

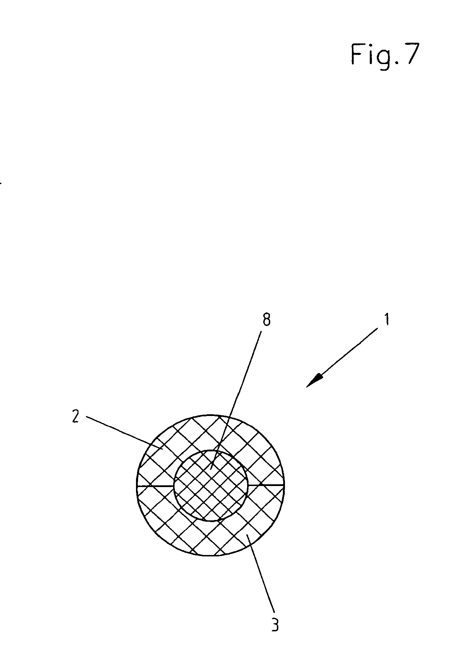

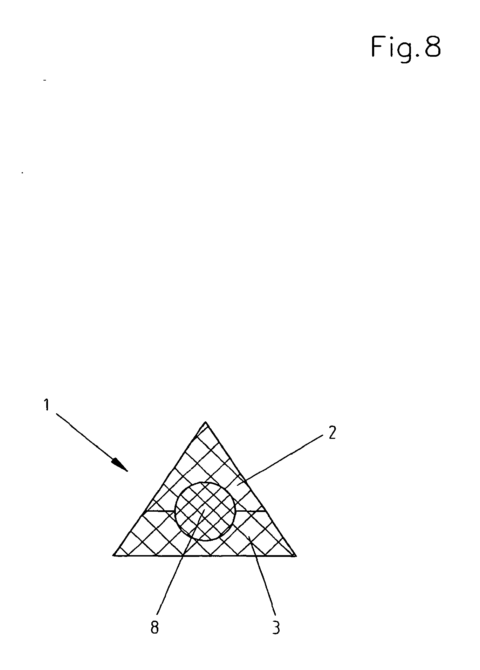

Die Figuren 7 und 8 zeigen eine kreisförmig (Fig. 7) beziehungsweise dreieckförmig (Fig. 8) ausgebildete Flachdichtung 1. Die Einlage 8 besteht in diesen Ausführungen aus einem O-Ring. In anderen Ausführungen kommen auch metallische Einlagen in Frage. Es ist auch eine ellipsoide Formgebung der Flachdichtung 1 denkbar.

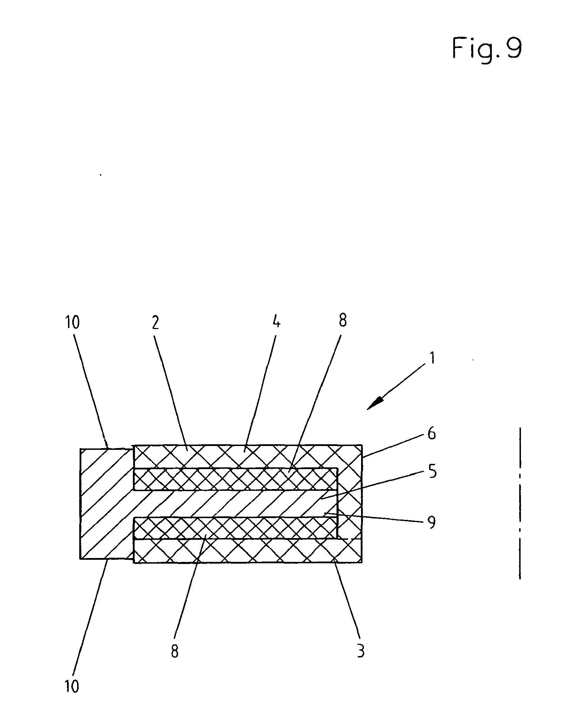

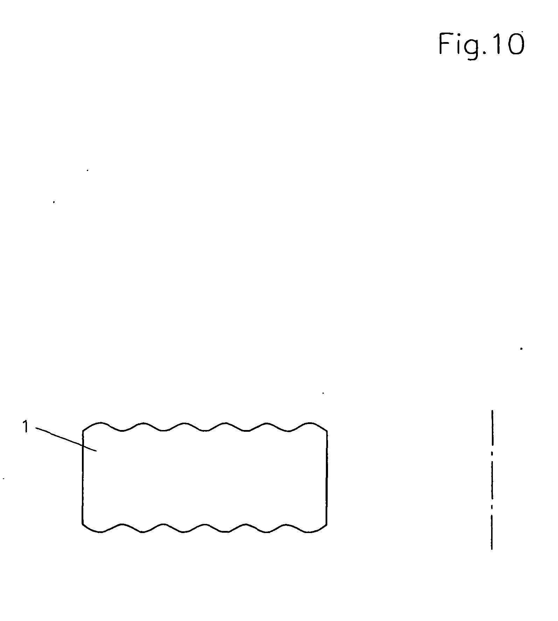

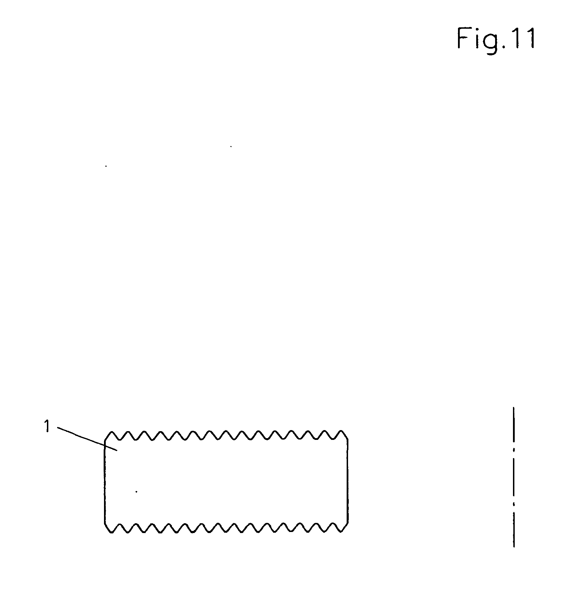

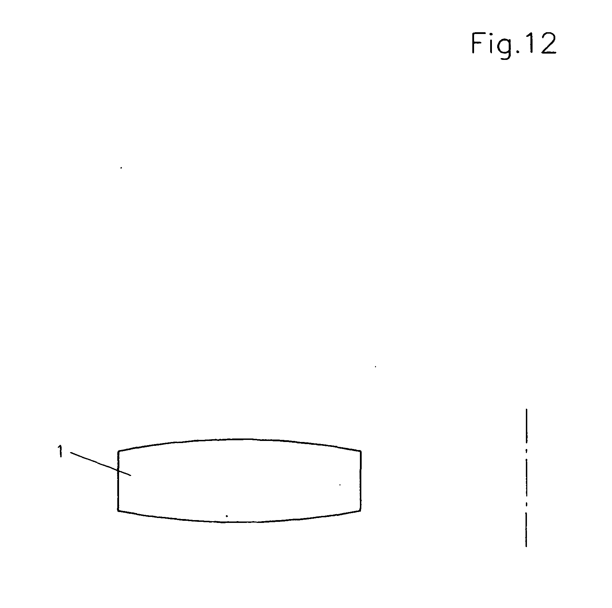

Figur 9 zeigt die Flachdichtung 1 gemäß Figur 1 bei der die metallische Einlage 9 T-förmig ausgebildet ist, wobei die Einlage 9 an dem Außenumfang der Flachdichtung herausragt und zwei Berührungsflächen 10 bildet, die nach Montage an dem abzudichtenden Maschinenelement anliegen. Dabei ist die Dicke des T-Stücks so gewählt, dass die Berührungsflächen 10 nach einer definierten Verpressung der Lagen 2, 3 mit dem abzudichtenden Maschinenelement, beispielsweise einem Flansch, in Eingriff gelangen und so einen Kraftnebenschluss bilden. Die Figuren 10, 11 und 12 zeigen verschiedene Ausführungen von Oberflächenprofilierungen die derart ausgestaltet sind, dass sich aufgrund von Linienberührungen eine höhere Flächenpressung ergibt. Figur 10 zeigt eine wellenförmige, Figur 11 eine kammartige und Figur 12 eine konvexe Oberflächengeometrie. Es sind auch konkave oder knochenförmige Oberflächengeometrien denkbar.

## Patentansprüche

1. Flachdichtung (1) zur statischen Abdichtung von Maschinenelementen, umfassend zwei Lagen (2, 3) aus einem mit PTFE versehenen Trägermaterial (4) und zumindest eine Einlage (5) die zwischen den Lagen (2, 3) angeordnet ist wobei die zwei Lagen (2, 3) so verbunden sind, dass zumindest der Innenumfang (6) der Flachdichtung (1) geschlossen ist, **dadurch gekennzeichnet, dass** das PTFE in das Trägermaterial eingelagert ist.

2. Flachdichtung nach Anspruch 1, **dadurch gekennzeichnet, dass** die zwei Lagen (2, 3) am Innenumfang (6) und am Außenumfang (7) der Flachdichtung (1) stoffschlüssig miteinander verbunden sind.

3. Flachdichtung nach Anspruch 1 oder 2, **dadurch gekennzeichnet, dass** das Trägermaterial (4) ein Vliesstoff ist.

4. Flachdichtung nach einem der Ansprüche 1 bis 3, **dadurch gekennzeichnet, dass** die Einlage (5) zumindest teilweise aus einem elastomeren Werkstoff besteht.

5. Flachdichtung nach einem der Ansprüche 1 bis 3, **dadurch gekennzeichnet, dass** die Einlage (5) zumindest teilweise aus einem metallischen Werkstoff besteht.

6. Flachdichtung nach einem der Ansprüche 1 bis 5, **dadurch gekennzeichnet, dass** die Einlage (5) zumindest ein Element (8) aus einem elastomeren Werkstoff und zumindest ein weiteres Element (9) aus einem metallischen Werkstoff aufweist.

7. Verfahren zur Herstellung einer Flachdichtung (1) nach einem der vorherigen Ansprüche, umfassend die Schritte:
• Benetzen eines Trägermaterial (4) mit PTFE und anschließendes Trocken;
• Ausstanzen von Lagen (2, 3) aus dem Trägermaterial (4)
• Konfektionieren der Flachdichtung (1) bestehend aus Lagen (2, 3) und Einlagen (5);
• Formgebungsverfahren, welches derart durchgeführt wird, dass die Flachdichtung (1) zumindest an ihrem Innenumfang (6) mit dem mit PTFE versehenen Trägermaterial (4) versehen ist, mit dem Formgebungsverfahren gleichzeitig eine Wärmebehandlung der Flachdichtung (1) erfolgt.

8. Verfahren nach Anspruch 7, **dadurch gekennzeichnet, dass** eine Lage (2) eine größere Fläche aufweist als die andere Lage (3), wobei der Überstand (10) der größeren Lage (2) beim Formgebungsverfahren in Richtung des Innenumfangs (6) oder in Richtung des Innenumfangs und des Auβernumfangs (6, 7) der Flachdichtung (1) umgeformt wird.

9. Verfahren nach einem der Ansprüche 7 bis 8, gekennzeichnet dass zumindest eine weitere Lage (11) aus dem Trägermaterial (4) ausgestanzt wird, die am Innenumfang (6) der Flachdichtung (1) angeordnet wird und die im Formgebungsverfahren stoffschlüssig mit den beiden Lagen (2, 3) verbunden wird.

## Claims

1. Gasket (1) for the static sealing of machine elements, comprising two layers (2, 3) made of a carrier material (4) provided with PIFE and at least one insert (5) which is arranged between the layers (2, 3), the two layers (2, 3) being connected such that at least the inner circumference (6) of the gasket (1) is closed, **characterized in that** the PTFE is embedded in the carrier material.

2. Gasket according to Claim 1, **characterized in that** the two layers (2, 3) are connected integrally to each other at the inner circumference (6) and at the outer circumference (7) of the gasket (1).

3. Gasket according to Claim 1 or 2, **characterized in that** the carrier material (4) is a nonwoven material.

4. Gasket according to one of Claims 1 to 3, **characterized in that** the insert (5) consists at least partly of an elastomer material.

5. Gasket according to one of Claims 1 to 3, **characterized in that** the insert (5) consists at least partly of a metallic material.

6. Gasket according to one of Claims 1 to 5, **characterized in that** the insert (5) has at least one element (8) made of an elastomer material and at least one further element (9) made of a metallic material.

7. Method for manufacturing a gasket (1) according to one of the preceding claims, comprising the steps:
• wetting a carrier material (4) with PTFE and subsequently drying it;
• punching layers (2, 3) out of the carrier material (4) ;
• tailoring the gasket (1) consisting of layers (2, 3) and inserts (5);
• a shaping process, which is carried out in such a way that the gasket (1) is provided, at least on its inner circumference (6), with the carrier material (4) provided with PTFE, and heat treatment of the gasket (1) is carried out at the same time as the shaping process.

8. Method according to Claim 7, **characterized in that** one layer (2) has a larger area than the other layer (3), the overlap (10) of the larger layer (2) being moulded over in the direction of the inner circumference (6) or in the direction of the inner circumference and of the outer circumference (6, 7) of the gasket (1) during the shaping process.

9. Method according to either of Claims 7 and 8, **characterized in that** at least one further layer (11) is punched out of the carrier material (4), is arranged on the inner circumference (6) of the gasket (1) and, in the shaping process, is connected integrally to the two layers (2, 3).

## Revendications

1. Joint plat (1) destiné à l'étanchéité statique d'éléments de machine, comprenant deux couches (2, 3) en un matériau de support (4) muni de PTFE et au moins une couche interne (5) qui est disposée entre les couches (2, 3), dans lequel les deux couches (2, 3) sont assemblées d'une manière telle qu'au moins le périmètre intérieur (6) du joint plat (1) soit fermé, **caractérisé en ce que** le PTFE est incorporé dans le matériau de support.

2. Joint plat selon la revendication 1, **caractérisé en ce que** les deux couches (2, 3) sont assemblées l'une à l'autre en continuité de matière au périmètre intérieur (6) et au périmètre extérieur (7) du joint plat (1).

3. Joint plat selon la revendication 1 ou 2, **caractérisé en ce que** le matériau de support (4) est une étoffe non tissée.

4. Joint plat selon l'une quelconque des revendications 1 à 3, **caractérisé en ce que** la couche interne (5) se compose au moins en partie d'un matériau élastomère.

5. Joint plat selon l'une quelconque des revendications 1 à 3, **caractérisé en ce que** la couche interne (5) se compose au moins en partie d'un matériau métallique.

6. Joint plat selon l'une quelconque des revendications 1 à 5, **caractérisé en ce que** la couche interne (5) présente au moins un élément (8) en un matériau élastomère et au moins un autre élément (9) en un matériau métallique.

7. Procédé de fabrication d'un joint plat (1) selon l'une quelconque des revendications précédentes, comprenant les étapes suivantes:
• mouiller le matériau de support (4) avec du PTFE et ensuite le sécher;
• découper des couches (2, 3) hors du matériau de support (4);
• confectionner le joint plat (1) composé de couches (2, 3) et de couches internes (5);
• appliquer un procédé de formage, qui est exécuté de telle manière que le joint plat (1) soit pourvu du matériau de support (4) muni de PTFE au moins sur son périmètre intérieur (6), et un traitement thermique du joint plat (1) est effectué en même temps que le procédé de formage.

8. Procédé selon la revendication 7, **caractérisé en ce qu'**une couche (2) présente une plus grande surface que l'autre couche (3), dans lequel l'extrémité saillante (10) de la plus grande couche (2) est déformée en direction du périmètre intérieur (6) ou en direction du périmètre intérieur et du périmètre extérieur (6, 7) du joint plat (1) lors du procédé de formage.

9. Procédé selon l'une quelconque des revendications 7 à 8, **caractérisé en ce que** l'on découpe hors du matériau de support (4) au moins une autre couche (11), qui est disposée sur le périmètre intérieur (6) du joint plat (1) et qui est assemblée en continuité de matière aux deux couches (2, 3) pendant le procédé de formage.
